(19)

**Europäisches Patentamt**
**European Patent Office**
**Office européen des brevets**

(11) **EP 4 686 846 A1**

(12) **EUROPEAN PATENT APPLICATION**

(43) Date of publication:
**04.02.2026 Bulletin 2026/06**

(21) Application number: **25190237.5**

(22) Date of filing: **17.07.2025**

(51) International Patent Classification (IPC):
*F16C 19/38* (2006.01)      *F16C 23/08* (2006.01)
*F16C 33/46* (2006.01)      *F16C 33/48* (2006.01)
*F16C 33/54* (2006.01)

(52) Cooperative Patent Classification (CPC):
**F16C 23/086; F16C 19/38; F16C 33/4676;**
**F16C 33/541; F16C 33/543;** F16C 33/485;
F16C 2240/70; F16C 2240/82; F16C 2300/14;
F16C 2360/31

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.07.2024   DE 102024207172**

(71) Applicant: **Aktiebolaget SKF**
**415 50 Göteborg (SE)**

(72) Inventors:
• **Weigand, Stefan Manfred**
  **97517 Rannungen (DE)**
• **Qian, Weihua**
  **Shanghai, 200000 (CN)**
• **Zhu, Jinguang**
  **Dalian, 116092 (CN)**

• **Hofmann, Sabine**
  **97273 Kürnach (DE)**
• **Reichert, Juergen**
  **97499 Donnersdorf (DE)**
• **Fritz, Dominik**
  **97074 Würzburg (DE)**
• **Ramachandran, Sankar**
  **43145 Mölndal (SE)**
• **Sahlgren, Johan**
  **43136 Mölndal (SE)**
• **Jolkin, Alexei**
  **41574 Göteborg (SE)**
• **Freden, Jens Håkan**
  **44930 Nödinge (SE)**
• **Du, Longnian**
  **Dalian, 116600 (CN)**

(74) Representative: **Kuhstrebe, Jochen**
**SKF GmbH**
**Gunnar-Wester-Straße 12**
**97421 Schweinfurt (DE)**

(54) **SPHERICAL ROLLER BEARING HAVING RADIALLY OFFSET CAGE BARS**

(57)     Disclosed is a spherical roller bearing (1), in particular for supporting a wind turbine main shaft, comprising: at least an outer ring (4), and an inner ring (6), wherein the inner ring (6) has a bore having a diameter of at least 499mm, two set of spherical rollers (8) which are rolling along raceways (9, 11) formed on the outer and inner ring (4, 6), and at least one cage (2, 2-1, 2-2) configured to retain the rollers (8), wherein the at least one cage (2, 2-1, 2-2) comprises at least one axial inner cage ring (10) extending in a circumferential direction of the spherical roller bearing (1), a first axial outer cage ring (12-1) spaced from the at least one axial inner cage ring (10) on a first axial side and connected to it with a plurality of cage bars (14) thereby forming closed pockets (16), wherein each pocket (16) is configured to receive one spherical roller (8) of the first set of rollers, and a second axial outer cage ring (12-2) spaced from the at least one axial inner cage ring (10) on a second axial side opposite of the first axial side and connected to it with a plurality of cage bars (14) thereby forming closed pockets (16), wherein each pocket (16) is configured to receive one spherical roller (8) of the second set of rollers, wherein the cage bars (14) are at least partially arranged at a position in a radial direction that is offset to a pitch diameter (P).

Fig. 1

## Description

Technical field of the invention

The present invention relates to a spherical roller bearing. Furthermore, the present invention relates to a bearing arrangement comprising a spherical roller bearing.

Background of the invention

Rolling bearings are common mechanical components for many different applications. There are different types of rolling bearings that are designed to meet different requirements. Depending on the conditions of the particular application, i.e., the load level, the rotational speed, the temperature, etc., there are different types of suitable rolling bearings.

A common type of bearing is a spherical roller bearing. The bearing is designed to accommodate large radial loads and axial loads, and it is also designed to accommodate flexing of a shaft supported by the bearings, i.e., the bearing rings can be relatively misaligned. Therefore, such bearings are particularly suitable for more demanding industrial applications such as machines in wind turbines and the like.

In order to support larger loads it is necessary to increase the basic dynamic load rating (also denoted as C) of the bearing. Generally, the basic dynamic load rating of the bearing may be influenced by a variety of parameters such as the material of the bearings and/or rolling elements, the number of rolling element rows, a contact angle, a diameter of the rolling elements, an effective rolling element length, etc. But most of these parameters cannot be adapted without the necessity of adapting the bearing rings. Adapting the bearing rings in material, geometry and/ dimension, however, can be costly.

It is therefore object of the present invention to increase the basic dynamic load rating of a spherical roller bearing without significantly increasing the costs of the bearing.

Summary of the invention

This object is solved by a spherical roller bearing according to claim 1.

In the following, a spherical roller bearing is provided. The spherical roller bearing may be used for supporting a wind turbine main shaft.

The spherical roller bearing comprises at least an outer ring, an inner ring, and two set of spherical rollers which are rolling along raceways formed on the outer and inner ring, and at least one cage configured to retain the rollers. The inner ring has a bore with a diameter of at least 499mm, preferably at least 699mm, and even more preferred at least 899mm. The bore may be adapted to receive a component of another machine, for example a shaft of a wind turbine.

The inner ring may be formed with or without flanges on an axial inner side and/or an axial outer side. If the inner ring is equipped with flanges, flanges may be used as guide flanges for the roller elements. Furthermore, they may also serve as retaining flanges for preventing the rollers from falling out of the bearing.

The at least one cage comprises at least one axial inner cage ring extending in a circumferential direction of the bearing, a first axial outer cage ring spaced from the at least one axial inner cage ring on a first axial side and connected to it with a plurality of cage bars thereby forming closed pockets, wherein each pocket is configured to receive one spherical roller of the first set of rollers, and a second axial outer cage ring spaced from the at least one axial inner cage ring on a second axial side opposite of the first axial side and connected to it with a plurality of cage bars thereby forming closed pockets, wherein each pocket is configured to receive one spherical roller of the second set of rollers.

To increase the load bearing capacity of the spherical roller bearing, the cage bars are at least partially arranged at a position in a radial direction that is at least partially offset to a pitch diameter.

The term "pitch diameter" may describe the diameter on which the center points of the spherical rollers will run during operation.

The spherical rollers may comprise raceways which are configured to roll upon the raceways formed on the inner ring and the outer ring.

For example, the cage bars may be at least partially arranged at a distance from the raceway of the inner or outer ring in the radial direction that corresponds to 10 to 40 % of a diameter of a spherical roller, or 60 to 90% of the diameter of the spherical roller, respectively.

**In** particular, the cage bars may be at least partially arranged on a radially inner side of the pitch diameter.

Furthermore, at least one cage bar may be arranged such that more than half of a cage bar length in the axial direction or even the entire axial cage bar length is arranged offset to the pitch diameter. For example, the at least one cage bar may be arranged such that more than half of its axial length or even its entire axial length is in a radially inner side or a radially outer side of the pitch diameter. Moreover, a plurality of the cage bars or even all cage bars may be arranged such that more than half of their axial length or even their entire axial length are in a radially inner side or a radially outer side of the pitch diameter.

Arranging the cage bars at least partially at a position in a radial direction that is offset to a pitch diameter may allow to decrease a distance between two neighboring rollers such that it may be possible to increase the number of rollers in a set of rollers. In addition, arranging the cage bars at least partially at a position in a radial direction that is offset to a pitch diameter may allow to increase a width of the cage bar even with very small roller distances. More particularly, increasing the number of rollers in the set of rollers may have the advantage that the basic dynamic load rating of the spherical roller bearing can be increased without the necessity of adapting the outer ring and/or inner ring of the bearing.

According to a further embodiment, the at least one cage may be made from sheet metal.

Using sheet metal as the base material for the at least one cage may have the advantage of reducing the costs for the at least one cage.

Alternatively, the cage may be made from a casted material or machined from a solid material.

According to a further embodiment, the pockets may be formed by pressing and coining and/or milling.

According to a further embodiment, the inner ring is not provided with a flange configured to retain and/or guide the spherical rollers.

Providing the at least one cage with closed pockets for the rollers may have the advantage of stopping an axial movement of the roller. This allows to omit any guiding and/or retaining flanges on the inner ring. Furthermore, the manufacturing time may be reduced since the machining of the flanges is not needed. Also, the stresses in the inner ring may be reduced as no undercut has to be formed in the inner ring to form the retaining flange. Thus, the costs and/or the needed amount of raw material for the inner ring can be reduced.

According to a further embodiment, the spherical roller bearing is not equipped with a guide ring.

A guide ring or mid rip flange is usually used to limit a roller skew in an unloaded zone of the spherical roller bearing such that the spherical rollers enter the loaded zone of the spherical roller bearing with a limited skew. This is particularly necessary in high-speed application. Usually, wind main shaft applications are low speed application with a rotational speed of 15RPM or lower. This allows to omit a guide ring.

According to a further embodiment, the at least one cage may be free of any means for retaining at least one spherical roller in the at least one cage and/or in a pocket of the at least one cage.

In particular, the at least one cage and/or parts of the cage, such as the axial inner cage ring, the axial outer cage ring, the cage bars, or the like, may be free of any means for holding or retaining the spherical rollers such that they cannot be lost. In other words, the at least one cage may comprise neither means for snapping the spherical rollers into the at least one cage nor dimples formed on the axial end faces of the pockets for engaging with recesses formed on end faces of the spherical rollers. Due to the lack of retaining means, the manufacturing costs for the at least one cage may be reduced. Also, since the at least one cage may be free of any means for retaining at least one spherical roller in the cage it may be possible to exchange individual spherical rollers, for example during maintenance.

According to a further embodiment, the at least one cage and/or the spherical rollers may be mountable into the spherical roller bearing without elastically and/or plastically deforming the at least one cage and/or without disassembling the at least one cage. In particular, the term "deforming the at least one cage and/or disassembling the at least one cage" may refer to a procedure of bending, twisting, distorting, cutting, or otherwise dismantling the at least one cage in order to mount the at least one cage and/or any of the spherical rollers into the spherical roller bearing.

According to a further embodiment, a ratio Dm/Dw of a minimal distance Dm in the circumferential direction between the raceways of two neighboring spherical rollers of at least one set of spherical rollers to a maximal roller diameter Dw is equal to or below 0.11, preferably 0.09, and even more preferred 0.075, when the spherical rollers of the at least one set of spherical rollers are equally spaced in the circumferential direction.

Reducing a distance between two rollers in the circumferential direction allows to increase the number of rollers in the set of rollers. For example, it may be possible to increase the number of rollers in the set of rollers by at least one. This may allow to increase the basic dynamic load rating of the spherical roller bearing. Moreover, increasing the number of rollers in the set of rollers by at least one may have the advantage of significantly increasing a service life of the spherical roller bearing. Furthermore, the ratio Dm/Dw of the minimal distance Dm in the circumferential direction between the raceways of two neighboring spherical rollers of the first set of rollers to the maximal roller diameter Dw, when the spherical rollers of the first set of rollers are equally spaced in the circumferential direction, may be equal to or different than the ratio Dm/Dw of the minimal distance Dm in the circumferential direction between the raceways of two neighboring spherical rollers of the second set of rollers to the maximal roller diameter Dw, when the spherical rollers of the second set of rollers are equally spaced in the circumferential direction.

When the spherical rollers of at least one set of spherical rollers are equally spaced in the circumferential direction, a minimal distance Dm in the circumferential direction between the raceways of two neighboring spherical rollers of the at least one set of spherical rollers may be equal to or below a value obtained by the following equation:

$$Dm \leq 0.0064\,mm \cdot (\,ln\ (P \cdot Dw + Dw)\,)^3$$

wherein P is the pitch diameter and Dw is the maximal roller diameter, wherein the millimeter values of P and Dw are to be used as dimensionless variables. Moreover, the minimal distance Dm in the circumferential direction between the raceways of two neighboring spherical rollers of the first set of rollers, when the spherical rollers of the first set of rollers are equally spaced in the circumferential direction, may be equal to or different than the minimal distance Dm in the circumferential direction between the raceways of two neighboring spherical rollers of the second set of rollers, when the spherical rollers of the second set of rollers are equally spaced in the circumferential direction.

According to a further embodiment, each set of spherical rollers may comprise the same number of spherical rollers. Preferably, each set of spherical rollers may comprise the maximal number of spherical rollers.

Fitting the spherical roller bearing with the maximal number of spherical rollers, may allow to increase the basic dynamic load rating of the spherical roller bearing.

According to a further embodiment, the axial inner cage ring and/or at least one of the axial outer cage rings may include a flange element that extends radially inward or radially outward.

Having a flange element that extends radially inward or radially outward may allow to limit cage deformations if strong forces act on the at least one cage causing the cage to deform.

According to a further embodiment, the axial inner cage ring and at least one of the axial outer cage rings may include a radially extending flange element, wherein both flange elements extend radially inward or radially outward.

Having both cage rings equipped with a radially extending flange element may lead to an additional increase of a stiffness of the cage. This benefits in a lower deformation of the cage and a better cage performance.

According to a further embodiment, the axial inner cage ring and at least one of the axial outer cage rings may include a radially extending flange element, wherein one flange element extends radially inward, and the other flange element extends radially outward.

Having one flange element extends radially inward and the other flange element extends radially outward may lead to a significant increase of the stiffness. This allows to decrease the deformation of the cage even further and may allow for a better cage performance.

According to a further embodiment, a shoulder clearance is larger than a radial cage clearance.

In particular, the shoulder clearance may be defined as the difference of a bore diameter of the cage ring and a diameter of the inner ring at a position of the cage ring. By designing the cage such that the shoulder clearance is larger than the radial cage clearance, it is possible to make the cage is roller guided.

For example, the shoulder clearance may be designed such that it is between 1 and 15 mm larger than the radial cage clearance, if the cage bore diameter up to 1200mm. In case the cage bore diameter is larger than 1200mm, the shoulder clearance may be designed such that it is between 1 and 20 mm larger than the radial cage clearance.

Moreover, the radial cage clearance may be in the range of 0.2 to 5mm, preferably between 0.5 to 3mm.

The radial cage clearance may be measured by the maximal radial movement of the at least one cage inside the bearing.

According to a further embodiment, the at least one cage is predominantly roller guided.

The term "predominantly roller guided" refers to a case in which the cage is usually roller guided, but in cases in which the cage is deformed, for example due to high forces acting on the cage, the deformation may be limited by the cage bore. This may limit the extreme loads on the cage. This guiding principle may also be called "mixed guidance." Alternatively, the at least one cage may be just roller guided. In other words, even if the cage deforms, the cage is designed in such a way that no contact between the cage rings and the inner or outer ring occurs. Roller guided and/or predominantly roller guided cages may have the advantage that they may experience less wear compared to shoulder guided cages. This may result in less particles in the bearing, which can lead to an increased service life.

In another alternative design, the at least one cage may be predominantly shoulder guided at the cage bore and/or supported on a mid-rib or guiding flange of the inner ring.

According to a further embodiment, each pocket of the at least one cage is adapted to limit a skew of the spherical roller accommodated in the pocket.

Limiting the skew of the spherical roller in the pocket may reduce a contact force generated by the roller contacting the cage. This may further lead to a reduced wear on the at least one cage.

For example, the skew of the roller in the pocket may be limited by a radial cage clearance. In addition or alternatively, the roller skew may be limited by an axial cage pocket clearance. In particular, the axial cage pocket clearance may be between 0.2 and 2.5mm, preferably between 0.5 and 2 mm, or even more preferred between 0.7 to 1.5 mm.

According to a further embodiment, each cage bar may be provided with a contact surface configured to contact the spherical roller, wherein the contact surface may be positioned at a circumferential side face of each cage bar.

Furthermore, the contact surface may be provided with a radius. This allows that if the roller is skewed and/or moves in the axial direction, the contact between the roller and the contact surface may be still tangential with reduced contact loads. This may result in a decreased risk of wear.

According to a further embodiment, a circumferential side face of each cage bar may be provided in the axial direction with one contact area.

For example, the circumferential side face of each cage bar may be provided with an osculation between the cage bar and the roller. The osculation, which is the radius on cage bar divided by a crowning radius of the roller, may be between 100% and 104%. This may lead to a reduction of the contact stresses compared to a straight cage bar.

According to a further embodiment, a circumferential side face of each cage bar may be provided in the axial direction with at least two contact areas configured to contact the roller.

Preferably, the contact areas may be located adjacent to the side faces of the roller. Having at least two contact areas may reduce roller skew. Furthermore, at least two contact areas may have the advantage that stress on the at least one cage may be reduced. **In** particular, when a point of contact between the roller and the cage bar is as close as possible to the cage rings, a bending moment of the cage bar may be reduced, resulting in reduced stress within the at least one cage.

According to a further embodiment, the axial inner cage ring may comprise a first ring element and a second ring element which are fixed to each other. This may have the advantage that the at least one cage may be formed by two identical cages that are fixed to each other. This may allow for an easier manufacturing process for the at least one cage.

According to a further aspect, a bearing arrangement for a wind turbine main shaft is provided, wherein the bearing arrangement includes at least one spherical roller bearing as described above.

All features described above with respect to the spherical roller bearing apply - separately or in combination - to the spherical roller bearing used in the bearing arrangement.

Further preferred embodiments are defined in the dependent claims as well as in the description and the figures. Thereby, elements described or shown in combination with other elements may be present alone or in combination with other elements without departing from the scope of protection.

Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:

Fig. 1: shows a schematic cross section of a spherical roller bearing according a first embodiment,
Fig. 2: shows a schematic cross section of a spherical roller at a maximal diameter of the spherical roller in a cage of the spherical roller bearing according to the first embodiment,
Fig. 3: shows a schematic perspective view of a part of a cage of the spherical roller bearing according to the first embodiment,
Fig. 4: shows a section of a side view of the spherical roller bearing according to the first embodiment, and
Fig. 5: shows a schematic cross section of a cage of a spherical roller bearing according to a second embodiment.

Detailed description of the invention

In the following same or similar functioning elements are indicated with the same reference numerals.

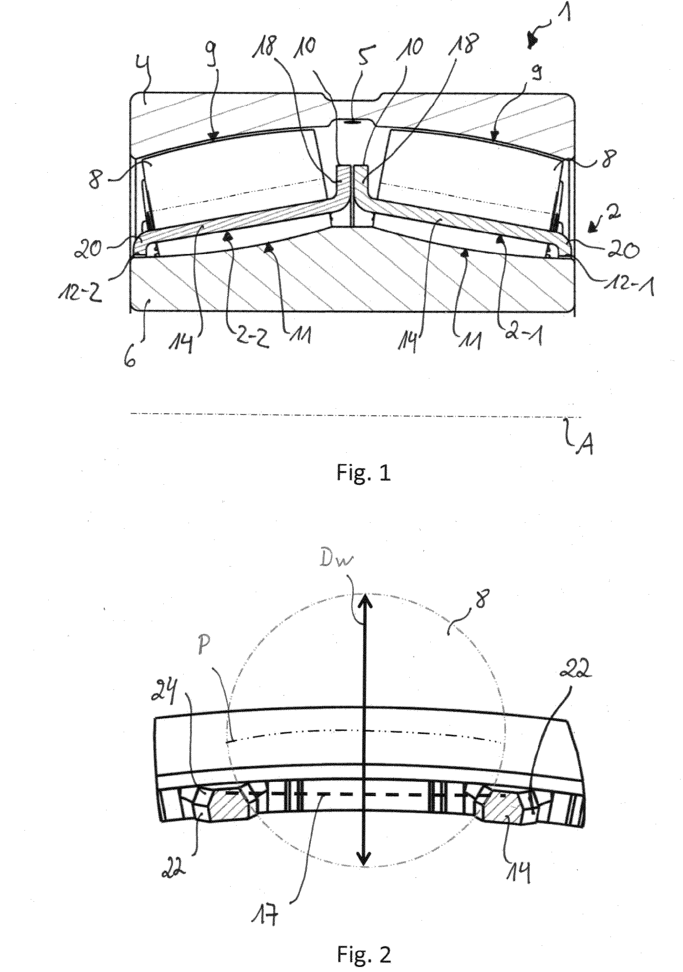

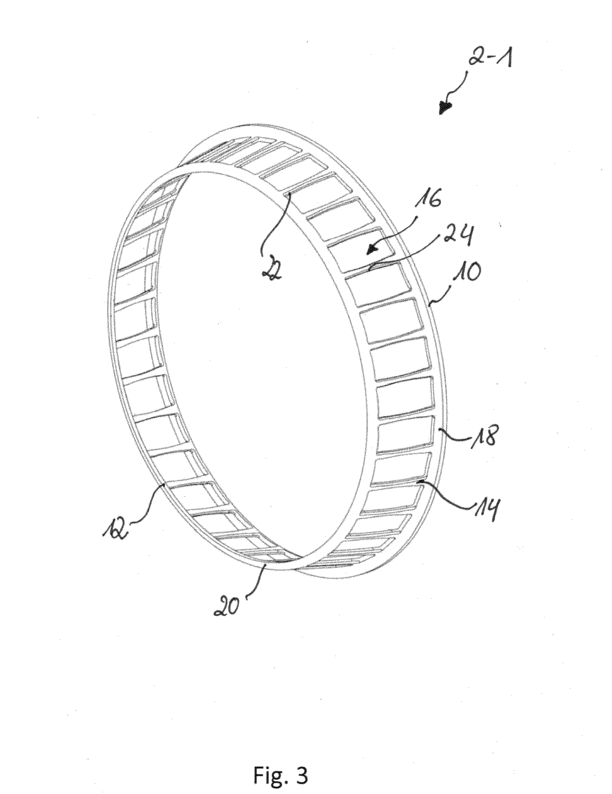

Fig. 1 to 4 show a spherical roller bearing 1 for supporting a wind turbine main shaft as well as a part of a cage 2 of the spherical roller bearing 1.

The spherical roller bearing 1 comprises an outer ring 4, and an inner ring 6, two set of spherical rollers 8 which are rolling along raceways 9 formed on the outer ring 4 and on raceways 11 formed on the inner ring 6. The outer ring 4 comprises an opening 5 through which lubricant can be provided to the spherical roller bearing 1. In particular, the outer ring may be stationary, while the inner ring may rotate around a rotational axis A. Furthermore, the inner ring 6 may be a configured to be mounted on a main shaft of a wind turbine.

The inner ring 6 may be formed with flanges or without flanges on an axial inner side and/or an axial outer side. The spherical roller bearing shown in Fig. 1 is formed without flanges for guiding and/or retaining the spherical rollers 8 on both the axial inner side and the axial outer side of the inner ring 6.

Furthermore, the spherical roller bearing comprises a cage 2 configured to retain both sets of spherical rollers 8. The cage of the spherical roller bearing shown in Fig. 1 comprises a first cage element 2-1 configured to retain the first set of spherical rollers 8, and a second cage element 2-2 which are identical in shape and connected to each other to form the cage 2. Fig. 2 shows the first cage element 2-1 in detail.

In addition, both the first cage element 2-1 and the second cage element 2-2 are free of any means for retaining at least one spherical roller 8 in either the first cage element 2-1 or the second cage element 2-2 or in a pocket 16 of the at least one cage 2. In other words, the first cage element 2-1 and the second cage element 2-2 do neither comprise means for snapping the spherical rollers 8 into the at least one cage 2 nor dimples formed on the axial end faces of the pockets for engaging with recesses formed on end faces of the spherical rollers 8.

Furthermore, the cage 2 can be mounted or installed into the spherical roller bearing 1 without elastically and/or plastically deforming the cage elements 2-1, 2-2 and/or without disassembling or cutting the cage elements 2-1, 2-2.

Each cage element 2-1, 2-2 comprises an axial inner cage ring 10 extending in a circumferential direction of the bearing, an axial outer cage ring 12 axially spaced from the axial inner cage ring 10 and connected to it with a plurality of cage bars 14 thereby forming closed pockets 16. Each pocket 16 is configured to receive one spherical roller 8. In particular, each cage element 2-1, 2-2 may be integrally formed.

As an alternative, the cage 2 may be formed in one piece such that the cage 2 comprises only one axial inner cage ring 10 instead of two axial inner cage rings 10 that are fixed to each other.

The axial inner cage ring 10 has a flange element 18 radially to the outside, and the axial outer cage ring 12 has a flange element 20 radially extending to the inside.

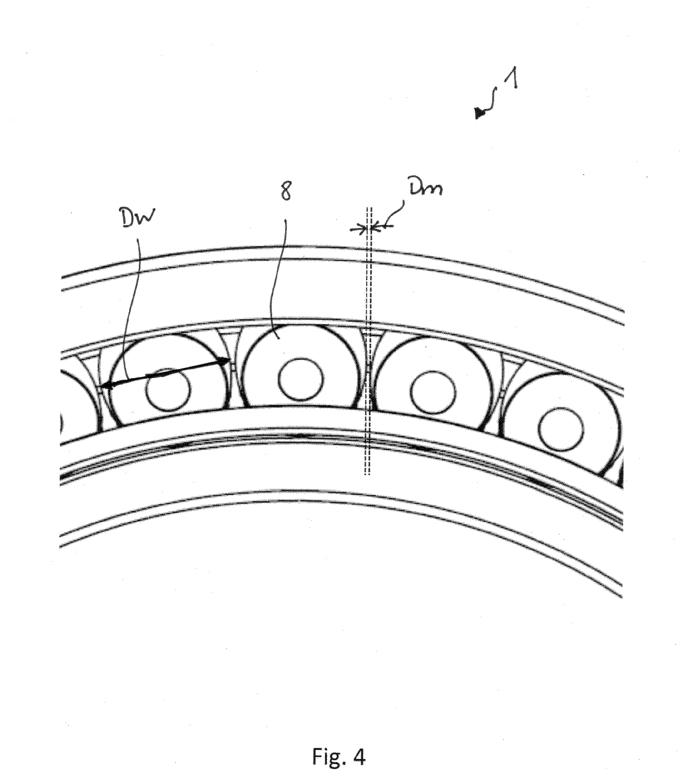

Moreover, the cage bars 14 are at least partially arranged at a position that is offset to the radial inside of a pitch diameter P of the spherical roller bearing 1. In the shown embodiment, the cage bar 14 is arranged such that a contact between the spherical roller 8 and the cage bar 14 is at a position that corresponds to about 30% of a maximal diameter Dw (as indicated by dashed line 17) of the spherical roller 8. The maximal diameter Dw of the spherical roller 8 is indicated in Fig. 4.

Arranging the cage bars 14 offset to the pitch diameter P may allow to decrease a minimal distance Dm (Fig. 4) between the raceways of two neighboring rollers 8 such that it may be possible to increase the number of rollers used in a set of rollers 8. The minimal distance Dm is determined in a condition in which the spherical rollers 8 are equally spaced in the circumferentially direction.

In particular, a ratio Dm/Dw of the minimal distance in the circumferential direction between the raceways of two neighboring spherical rollers 8 of the first and/or second set of spherical rollers to the maximal roller diameter Dw is equal to or below 0.11, preferably 0.09, and even more preferred 0.075, when the spherical rollers 8 of the respective set of rollers 8 are equally spaced in the circumferentially direction.

Alternatively or additionally, the minimal distance Dm in the circumferential direction between the raceways of two neighboring spherical rollers of the first and/or second set of spherical rollers may be equal to or below a value obtained by the following equation:

$$Dm \leq 0.0064\,mm \cdot (\,ln\,(P \cdot Dw + Dw)\,)^3$$

when the spherical rollers 8 of the respective set of rollers 8 are equally spaced in the circumferentially direction, wherein P is the pitch diameter and Dw is the maximal roller diameter, wherein the millimeter values of P and Dw are to be used as dimensionless variables.

The spherical roller bearing 1 is designed such that a shoulder clearance is larger than a radial cage clearance. For example, the shoulder clearance may be between 1 and 15 mm larger than the radial cage clearance, if the cage bore diameter up to 1200mm. In case the cage bore diameter is larger than 1200mm, the shoulder clearance may be between 1 and 20 mm larger than the radial cage clearance. This allows to design the cage 2 predominantly roller guided.

Furthermore, each cage bar 14 of the cage of the spherical roller bearing 1 according to the first embodiment, is provided with a contact surface 24 configured to contact the spherical roller 8, wherein the contact surface 24 is positioned at a circumferential side face of each cage bar 14.

The contact surface 24 is provided with a radius such that an osculation is formed between the cage bar 14 and the roller 8 along the roller axis. The osculation, which is the radius on cage bar 14 divided by a crowning radius of the roller, may be between 100% and 104%. Moreover, each cage bar 14 has in the axial direction one contact area 24.

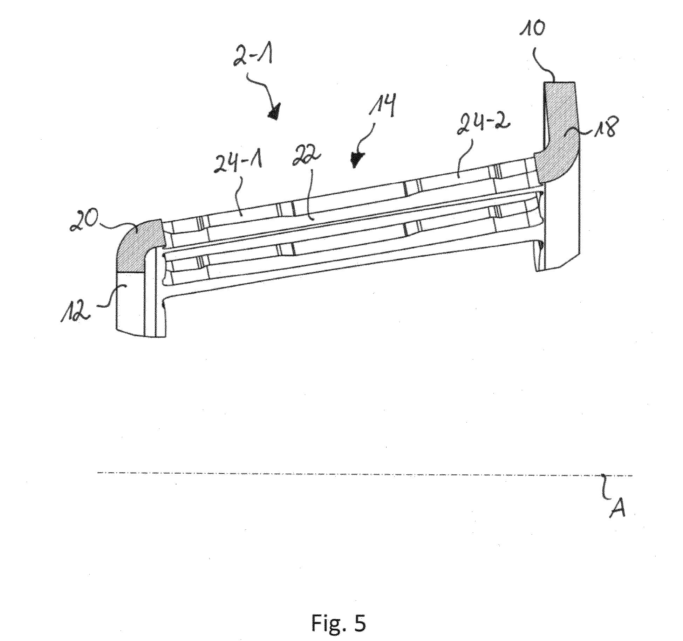

Fig. 5 shows a cross section of a cage 2 for a spherical roller bearing 1 according to a second embodiment. The cage 2 of the second embodiment differs from the cage 2 of the first embodiment in that a circumferential side face 22 of each cage bar 14 is provided in the axial direction with two contact areas 24-1, 24-2 configured to contact the roller.

Although, Fig.5 shows an embodiment having two contact areas 24-1, 24-2 it may also be possible to provide more than two contact areas.

In summary, the basic dynamic load rating of the spherical roller bearing 1 can be increased without the necessity to adapt the bearing rings. Furthermore, a flange at an axial inner and/or outer side can be omitted. This allows to reduce the amount of raw material needed for manufacturing the inner ring 6. Furthermore, due to the lower amount of material needed for manufacturing and the reduced amount of machining necessary for producing the inner ring 6, $CO_2$ emission for producing the spherical roller bearing can be reduced.

**Reference numerals**

| | |
|---|---|
| 1 | spherical roller bearing |
| 2 | cage |
| 2-1, 2-2 | cage element |
| 4 | outer ring |
| 5 | opening |
| 6 | inner ring |
| 8 | spherical roller |
| 9 | outer raceway |
| 10 | axial inner cage ring |
| 11 | inner raceway |
| 12-1, 12-2 | axial outer cage ring |
| 14 | cage bar |
| 16 | pocket |
| 17 | line |
| 18 | flange element |
| 20 | flange element |
| 22 | circumferential side face |
| 24 | contact area |
| A | rotational axis |
| P | pitch diameter |
| Dw | maximal roller diameter |
| Dm | minimal distance between two rollers |

**Claims**

1. Spherical roller bearing (1), in particular for supporting a wind turbine main shaft, comprising:

   at least an outer ring (4), and an inner ring (6), wherein the inner ring (6) has a bore having a diameter of at least 499mm,
   two set of spherical rollers (8) which are rolling along raceways (9, 11) formed on the outer and inner ring (4, 6), and
   at least one cage (2, 2-1, 2-2) configured to retain the rollers (8), wherein the at least one cage (2, 2-1, 2-2) comprises at least one axial inner cage ring (10) extending in a circumferential direction of the spherical roller bearing (1), a first axial outer cage ring (12-1) spaced from the at least one axial inner cage ring (10) on a first axial side and connected to it with a plurality of cage bars (14) thereby forming closed pockets (16), wherein each pocket (16) is configured to receive one spherical roller (8) of the first set of rollers, and a second axial outer cage ring (12-2) spaced from the at least one axial inner cage ring (10) on a second axial side opposite of the first axial side and connected to it with a plurality of cage bars (14) thereby forming closed pockets (16), wherein each pocket (16) is configured to receive one spherical roller (8) of the second set of rollers, **characterized in that** the cage bars (14) are at least partially arranged at a position in a radial direction that is offset to a pitch diameter (P).

2. Spherical roller bearing (1) according to claim 1, wherein the inner ring (6) is not provided with a flange configured to retain and/or guide the spherical rollers.

3. Spherical roller bearing (1) according to claims 1 or 2, wherein the spherical roller bearing (1) is not equipped with a guide ring.

4. Spherical roller bearing (1) according to any one of the previous claims, wherein a ratio Dm/Dw of a minimal distance Dm in the circumferential direction between the raceways of two neighboring spherical rollers (8) of at least one set of spherical rollers (8) to a maximal roller diameter (Dw) is equal to or below 0.11, preferably 0.09, and even more preferred 0.075, when the spherical rollers (8) of the at least one set of rollers (8) are equally spaced in the circumferential direction.

5. Spherical roller bearing (1) according to any one of the previous claims, wherein a minimal distance Dm in the circumferential direction between the raceways of two neighboring spherical rollers (8) of at least one set of spherical rollers (8) is equal to or below a value obtained by the following equation:

$$Dm \leq 0.0064 \text{ mm} \cdot (\ln (P \cdot Dw + Dw))^3,$$

when the spherical rollers (8) of the at least one set of spherical rollers (8) are equally spaced in the circumferential direction, wherein P is the pitch diameter and Dw is the maximal roller diameter, wherein the millimeter values of P and Dw are to be used as dimensionless variables.

6. Spherical roller bearing (1) according to any one of the previous claims, wherein

   the axial inner cage ring (10) and/or at least one of the axial outer cage rings (12-1, 12-2) includes a flange element (18, 20) that extends radially inward or radially outward, or
   the axial inner cage ring (10) and at least one of the axial outer cage rings (12-1, 12-2) includes a radially extending flange element (18, 20), wherein both flange elements (18, 20) extend radially inward or radially outward, or
   the axial inner cage ring (10) and at least one of the axial outer cage rings (12-1, 12-2) includes a radially extending flange element (18, 20), wherein one flange element (18, 20) extends radially inward, and the other flange element (18, 20) extends radially outward.

7. Spherical roller bearing (1) according to any one of the previous claims, wherein the at least one cage (2) is predominantly roller guided.

8. Spherical roller bearing (1) according to any one of the previous claims, wherein a shoulder clearance is larger than a radial cage clearance.

9. Spherical roller bearing (1) according to any one of the previous claims, wherein a circumferential side face (22) of each cage bar (14) is provided in the axial direction with one contact area (24), or at least two contact areas (24-1, 24-2) configured to contact the spherical roller (8).

10. Spherical roller bearing (1) according to any one of the previous claims, wherein each cage bar (14) is at least partially arranged at a distance from the raceway (9, 11) of the inner or outer ring (4, 6) in the radial direction that corresponds to 10 to 40 % of a diameter (19) of the spherical roller (8), or 60 to 90% of the diameter (19) of the spherical roller (8), respectively.

11. Spherical roller bearing (1) according to any one of the previous claims, wherein the cage bars (14) are arranged on a radially inner side of the pitch diameter (15).

12. Spherical roller bearing (1) according to any one of the previous claims, wherein the axial inner cage ring (10) comprises a first ring element (2-1) and a second ring element (2-2) which are fixed to each other.

13. Spherical roller bearing (1) according to any one of the previous claims, wherein the at least one cage (2) is free of any means for retaining at least one spherical roller (8) in the at least one cage (2) and/or in a pocket (16) of the at least one cage (2).

14. Spherical roller bearing (1) according to any one of the previous claims, wherein the at least one cage (2) and/or the spherical rollers (8) are mountable into the spherical roller bearing (1) without elastically and/or plastically deforming the at least one cage (2) and/or without disassembling the at least one cage (2).

15. Bearing arrangement for a wind turbine main shaft, wherein the bearing arrangement includes at least one spherical roller bearing (1) according to any one of the previous claims.

Fig. 1

Fig. 2

Fig. 3

Fig. 4

Fig. 5

Europäisches Patentamt
European Patent Office
Office européen des brevets

## EUROPEAN SEARCH REPORT

**Application Number**

EP 25 19 0237

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 314 985 A (SHANDONG CAMERY KMR BEARING SCIENCE & TECHNOLOGY CO LTD) 28 January 2015 (2015-01-28) | 1-8,10, 11,14,15 | INV. F16C19/38 F16C23/08 |
| Y | * paragraphs [0001], [0002]; figures 2-5 * | 9,12,13 | F16C33/46 F16C33/48 F16C33/54 |
| | ----- | | |
| Y | JP 2018 168988 A (NTN TOYO BEARING CO LTD) 1 November 2018 (2018-11-01) * paragraph [0002]; figures 1,3 * | 1-3,9, 12,13 | |
| | ----- | | |
| Y | CN 102 099 591 A (NTN TOYO BEARING CO LTD) 15 June 2011 (2011-06-15) * figures 1,6,8 * | 1-3 | |
| | ----- | | |
| A | DE 694 02 507 T2 (SKF AB [SE]) 18 September 1997 (1997-09-18) * figures 1,3,4,5 * | 1-15 | |
| | ----- | | |
| A | DE 10 2015 225678 A1 (SKF AB [SE]) 23 June 2016 (2016-06-23) * paragraph [0039]; figure 1 * | 1-15 | |
| | ----- | | |

**TECHNICAL FIELDS SEARCHED (IPC)**

F16C

The present search report has been drawn up for all claims

| Place of search | Date of completion of the search | Examiner |
|---|---|---|
| The Hague | 7 November 2025 | Kovács, Endre |

EPO FORM 1503 03.82 (P04C01)

## ANNEX TO THE EUROPEAN SEARCH REPORT
## ON EUROPEAN PATENT APPLICATION NO.

EP 25 19 0237

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| CN 104314985 | A | 28-01-2015 | NONE | | |
| JP 2018168988 | A | 01-11-2018 | NONE | | |
| CN 102099591 | A | 15-06-2011 | CN | 102099591 A | 15-06-2011 |
| | | | EP | 2309144 A1 | 13-04-2011 |
| | | | US | 2011116734 A1 | 19-05-2011 |
| | | | WO | 2010007979 A1 | 21-01-2010 |
| DE 69402507 | T2 | 18-09-1997 | DE | 69402507 T2 | 18-09-1997 |
| | | | EP | 0651168 A1 | 03-05-1995 |
| | | | JP | 2527418 B2 | 21-08-1996 |
| | | | JP | H07167137 A | 04-07-1995 |
| | | | SE | 500988 C2 | 17-10-1994 |
| | | | US | 5474388 A | 12-12-1995 |
| DE 102015225678 A1 | | 23-06-2016 | CN | 105715676 A | 29-06-2016 |
| | | | DE | 102015225678 A1 | 23-06-2016 |
| | | | US | 2016178001 A1 | 23-06-2016 |

EPO FORM P0459

For more details about this annex : see Official Journal of the European Patent Office, No. 12/82